(19) Europäisches Patentamt
European Patent Office
Office européen des brevets

(11) **EP 1 998 993 B1**

(12) **EUROPÄISCHE PATENTSCHRIFT**

(45) Veröffentlichungstag und Bekanntmachung des Hinweises auf die Patenterteilung:
**11.07.2018   Patentblatt 2018/28**

(21) Anmeldenummer: **07726750.8**

(22) Anmeldetag: **09.03.2007**

(51) Int Cl.:
*B60K 6/48* *(2007.10)*       *B60L 7/18* *(2006.01)*
*B60L 7/24* *(2006.01)*       *B60L 15/20* *(2006.01)*
*B60W 20/11* *(2016.01)*     *B60W 10/06* *(2006.01)*
*B60W 10/08* *(2006.01)*     *B60W 50/00* *(2006.01)*

(86) Internationale Anmeldenummer:
**PCT/EP2007/052228**

(87) Internationale Veröffentlichungsnummer:
**WO 2007/107462 (27.09.2007 Gazette 2007/39)**

(54) **BREMSSTRATEGIE FÜR EINEN HYBRIDANTRIEB EINES FAHRZEUGS**

BRAKING STRATEGY FOR A HYBRID DRIVE OF A VEHICLE

STRATÉGIE DE FREINAGE POUR UN SYSTÈME HYBRIDE DE PROPULSION D'UN VÉHICULE

(84) Benannte Vertragsstaaten:
**DE FR GB IT**

(30) Priorität: **21.03.2006   DE 102006012859**

(43) Veröffentlichungstag der Anmeldung:
**10.12.2008   Patentblatt 2008/50**

(73) Patentinhaber: **Robert Bosch GmbH**
**70442 Stuttgart (DE)**

(72) Erfinder:
• **WINTER, Thomas**
**71691 Freiberg Am Neckar (DE)**
• **WEBER, Nicole**
**71701 Schwieberdingen (DE)**
• **FASSNACHT, Jochen**
**78713 Schramberg (DE)**
• **HINDORF, Kay**
**71634 Ludwigsburg (DE)**

(56) Entgegenhaltungen:
EP-A- 1 160 119       WO-A-2005/100777
US-A- 5 993 351       US-A1- 2002 094 908
US-A1- 2005 182 526

EP 1 998 993 B1

**EP 1 998 993 B1**

**Beschreibung**

Stand der Technik

Aus DE 102 02 531 A1 ist ein Verfahren zur Steuerung eines Hybridantriebes eines Fahrzeugs bekannt. Der Hybridantrieb umfasst als Antriebsmaschinen eine Verbrennungskraftmaschine und wenigstens eine elektrische Maschine. Die Abtriebswellen der Antriebsmaschinen sind mit einem Antriebsstrang des Fahrzeugs verbindbar, wobei bei einer negativen Momentenanforderung (Bremsen) an den Antriebsstrang des Fahrzeugs eine kennfeldbasierte Ansteuerung der wenigstens einen elektrischen Maschine im generatorischen Betriebsmodus erfolgt. Die Ansteuerung der wenigstens einen elektrischen Maschine erfolgt in Abhängigkeit von einem Soll-Bremsmoment $M_{A, soll}$ und einer Fahrzeuggeschwindigkeit v. Die Ansteuerung wird von einem Regenerationsstrategieblock vorgenommen, der über eine Schnittstelle die erforderlichen Signale erhält und der über Funktionsmodule verfügt, die Steuersignale für die wenigstens eine elektrische Maschine generieren. Gemäß des aus DE 102 02 531 A1 bekannten Verfahrens ist ein Bremsmodulselektor vorgesehen, der in Abhängigkeit von an der Schnittstelle anliegenden Signalen wahlweise unterschiedliche Betriebsmodi für das Bremsen aktiviert, wobei die Betriebsmodi rein regeneratives Bremsen, kombiniertes regeneratives und mechanisches Bremsen sowie rein mechanisches Bremsen umfassen.

*Aus US2002/0094908, das als nächstliegender Stand der Technik angesehen wird und die Präambel des unabhängigen Anspruchs 1 zeigt, ist ein Hybridfahrzeug mit Vierradantrieb bekanntgeworden, welches zwei Antriebsstränge umfasst. Der erste Antriebsstrang umfasst einen Verbrennungsmotor, der über einen Motorgenerator ein Automatikgetriebe und ein hinteres Differentialgetriebe die Hinterräder antreibt. Die Vorderräder werden über den zweiten Antriebsstrang angetrieben, der einen zweiten Motorgenerator und ein vorderes Differentialgetriebe umfasst. Den beiden Motorgeneratoren steht eine Batterie als Speicher zur Verfügung. Ein Steuergerät bestimmt anhand von Eingangsdaten wie der Fahrzeuggeschwindigkeit, der Motordrehzahl, dem Ladezustand der Batterie, usw. die Sollantriebskraft der einzelnen Motoren. Bei Verzögerung des Fahrzeugs kann die Motorbremse des ersten Antriebsstrangs abgeschaltet werden und die beiden Motorgeneratoren können unabhängig voneinander zur Energierückgewinnung genutzt werden. Falls dabei die Kraftstoffzuführung für den Verbrennungsmotor unterbrochen wird, kann der erste Motorgenerator genutzt werden, um den Verbrennungsmotor auf einer Drehzahl zu halten, die ein sofortiges Starten ermöglicht.*

Fahrzeuge mit Hybridantrieb zeichnen sich dadurch aus, dass sie über zumindest zwei verschiedene Antriebsaggregate verfügen. Am häufigsten werden dabei eine fremdgezündete Die Drehzahlen der Verbrennungskraftmaschine und der mindestens einen elektrischen Maschine sind im Allgemeinen gekoppelt. Dadurch kann für begrenzte Zeiträume, die abhängig von der eingesetzten Batterie für den mindestens einen elektrischen Antrieb sind, hybridisches Fahren erfolgen, bei dem die mindestens eine Batterie für den mindestens einen elektrischen Antrieb des Parallelhybridantriebes entladen wird. Andererseits bietet der Parallelhybridantrieb die Möglichkeit, mit einem höheren Drehmoment der Verbrennungskraftmaschine, als am Getriebeeingang eigentlich gefordert ist, die mindestens eine Batterie über die mindestens eine elektrische Maschine aufzuladen. Einem rein elektrischen Fahrbetrieb stünde bei einer Triebstrangkonfiguration mit einer Kupplung das dauerhaft zu überwindende Schleppmoment der Verbrennungskraftmaschine entgegen, welches durch den Einsatz einer zweiten Trennkupplung zwischen der Verbrennungskraftmaschine und dem mindestens einen elektrischen Antrieb jedoch vermieden werden könnte. Dagegen spricht der hohe mechanische und konstruktive Mehraufwand für eine zusätzliche Kupplung zwischen der Verbrennungskraftmaschine und dem mindestens einen elektrischen Antrieb.

Mit einem Parallelhybridantrieb besteht die Möglichkeit, beim Bremsen kinetische Energie in elektrische Energie umzuwandeln und im Rahmen einer Rekuperation in die mindestens eine Batterie einzuspeisen. Aufgrund der fehlenden zweiten Trennkupplung zwischen der Verbrennungskraftmaschine und dem mindestens einen elektrischen Antrieb oder in Situationen, in denen bei vorhandener zweiter Trennkupplung die Verbrennungskraftmaschine nicht abgeschaltet werden soll, ist das Einspeisen von elektrischer Energie während einer Bremsphase nur so lange möglich, wie die von der Fahrtgeschwindigkeit und dem Übersetzungsverhältnis abhängige Drehzahl der Verbrennungskraftmaschine über der Mindestdrehzahl der Verbrennungskraftmaschine liegt, so dass die Trennkupplung beziehungsweise die Trennkupplungen bei Antriebssträngen mit zwei oder mehreren Trennkupplungen geschlossen bleiben kann beziehungsweise geschlossen bleiben können. Das vom Triebstrang aufgebrachte Bremsmoment setzt sich dann aus dem Schleppmoment $M_{Schlepp}$ der Verbrennungskraftmaschine und dem von der im Generatormodus betriebenen mindestens einen elektrischen Maschine aufgenommenen Moment zusammen.

Offenbarung der Erfindung

Der vorliegenden Erfindung liegt die Aufgabe zugrunde, eine Betriebsstrategie für einen Hybridantrieb bereitzustellen, die auch den Fall berücksichtigt, dass der Betrag des erforderlichen Bremsmomentes geringer ist als der Betrag des an der Verbrennungskraftmaschine eines Hybridantriebs vorliegenden Schleppmomentes $M_{Schlepp}$.

Der erfindungsgemäß vorgeschlagenen Lösung folgend, wird bei niedrigen geforderten Bremsmomenten ein energieoptimaler Betriebspunkt bestimmt, so dass sichergestellt ist, dass das vorliegende Rekuperationspotenzial optimal ausgenutzt wird. Durch eine optimale Ausnutzung des Rekuperationspotenzials eines Hybridantriebs kann in diesem speziellen Fahrbereich eines Fahrzeugs mit Hybridantrieb, insbesondere beim Bremsen, eine Reduzierung des Kraftstoffverbrauches erreicht werden. Zwar stellt der hier betrachtete Betriebsbereich nur einen geringen Anteil an den innerhalb auftretender Fahrzyklen vom Antrieb angenommenen Zuständen dar, jedoch lassen sich Situationen vorstellen, in denen sich die vorgeschlagene Betriebs-/Bremsstrategie positiv auswirkt. Beispielhaft sei zähflüssiger Verkehr genannt, etwa auf leicht abschüssiger Fahrbahn, bei dem weniger stark gebremst werden soll als durch die der fremdgezündeten Verbrennungskraftmaschine innewohnende Verzögerung aufgrund des Motorschleppmomentes $M_{Schlepp}$.

Die erfindungsgemäß vorgeschlagene Betriebs- beziehungsweise Bremsstrategie wird dann aktiv, wenn ein gefordertes Getriebeeingangsmoment $T_{GE, gef}$ kleiner als 0 wird und größer als das von der Verbrennungskraftmaschine herrührende Schleppmoment $T_{VB, Schlepp}$ ist. Die Entscheidung, welche durch die Bremsstrategie getroffen werden muss, berücksichtigt zwei mögliche Betriebsmodi der Verbrennungskraftmaschine eines Hybridantriebes. Entweder befindet sich die Verbrennungskraftmaschine im Schleppbetrieb, gekennzeichnet durch das von der Verbrennungskraftmaschine aufgebrachte Schleppmoment $T_{VB, Schlepp}$, oder die Verbrennungskraftmaschine liefert ohne Verstellung des Zündwinkels ihr minimales Antriebsmoment $T_{VB, min}$ größer 0. Bei fremdgezündeten Verbrennungskraftmaschinen, wie z. B. einem Ottomotor, ist es nicht sinnvoll, ein Moment einzustellen, welches zwischen den Werten 0 und dem Wert des minimalen Antriebsmomentes $T_{VB, min}$ liegt, da in diesem Bereich die eingespritzte Kraftstoffmenge konstant gehalten wird. Eine Momentenreduzierung wird hier lediglich über eine Verstellung des Zündwinkels erreicht.

Je nach Entscheidung, die innerhalb der Bremsstrategie getroffen wird, passt sich der mindestens eine elektrische Antrieb einem der obenstehend skizzierten Betriebsmodi an.

Befindet sich die Verbrennungskraftmaschine im Schleppbetrieb, gleicht der mindestens eine elektrische Antrieb das überschüssige Bremsmoment aus, indem die mindestens eine elektrische Maschine als Motor wirkt und ein Moment $T_{EM, 1} = T_{GE, gef} - T_{VB, Schlepp} > 0$ aufbringt.

Liefert die Verbrennungskraftmaschine hingegen ihr minimales Antriebsmoment $T_{VB, min}$, ohne dass der Zündwinkel eine Verstellung erfährt, so wird über das geforderte Bremsmoment hinaus auch dieses Moment, d. h. $T_{VB, min}$ zum Laden der mindestens einen Batterie des Fahrzeugs mit Hybridantrieb eingesetzt. In diesem Betriebsmodus wird der mindestens eine elektrische Antrieb im Generatormodus betrieben und nimmt das Moment $T_{EM, 2} = T_{GE, gef} - T_{VB, min} < 0$ auf.

Die Aufgabe der Bremsstrategie besteht darin, zu entscheiden, welche der beiden Varianten des Betriebsmodus' die energetisch günstigere ist.

Zeichnung

Anhand der Zeichnung wird die Erfindung nachstehend eingehender beschrieben.

Es zeigt:

Figur 1    die Struktur eines Parallelhybridantriebes mit einer Verbrennungskraftmaschine und einem Elektroantrieb und einer Kupplung,

Figur 2    die Darstellung eines Bremsbereiches, aufgetragen über ein am Getriebeeingang gefordertes Moment mit zwei Entscheidungsmöglichkeiten,

Figur 3    den resultierenden Leistungsfluss innerhalb eines hybridangetriebenen Fahrzeugs mit einer im Schleppbetrieb betriebenen Verbrennungskraftmaschine und einem im Motorbetrieb betriebenen Elektroantrieb,

Figur 4    den resultierenden Leistungsfluss innerhalb eines hybridangetriebenen Fahrzeugs mit mit minimalem Antriebsmoment betriebener Verbrennungskraftmaschine und einem im Generatorbetrieb betriebenen Elektroantrieb,

Figur 5    Eingangsgrößen eines Bremsfunktionsblockes und die Ermittlung des Drehmomentes der Verbrennungskraftmaschine, abhängig vom Getriebeeingangsmoment und der am Eingang des Getriebes vorliegenden Drehzahl, und

Figur 6    einen Signalflussplan zur Implementierung der Betriebsstrategie im in Figur 2 dargestellten Bremsbereich mit dem Eingangsgrößenmoment am Getriebeeingang und der Drehzahl am Getriebeeingang und dem Sollmoment der Verbrennungskraftmaschine als Ausgangsgröße.

Ausführungsbeispiele

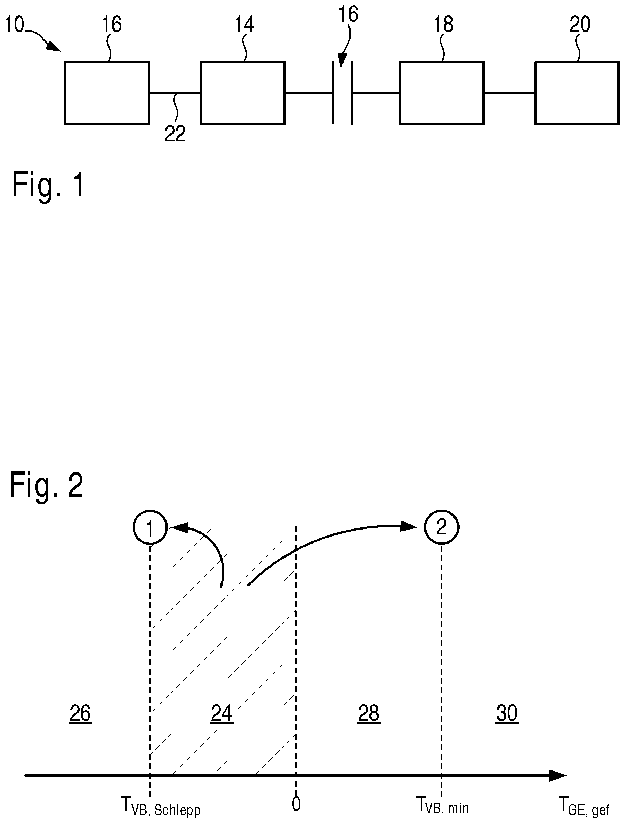

Der Darstellung gemäß Figur 1 ist die Struktur eines Hybridantriebes, insbesondere eines Parallelhybridantriebes, für ein Fahrzeug zu entnehmen.

Ein Hybridantrieb 10, insbesondere ein Parallelhybridantrieb, umfasst eine Verbrennungskraftmaschine 12 sowie mindestens einen elektrischen Antrieb 14. Während die Verbrennungskraftmaschine 12 und der mindestens eine elektrische Antrieb 14 über eine Kopplung 22 miteinander verbunden sind, ist der mindestens eine elektrische Antrieb 14 über eine Trennkupplung 16 von einem Fahrzeuggetriebe 18 trennbar. Dem Fahrzeuggetriebe 18 ist, in schematischer Weise in Figur 1 angedeutet, ein Triebstrang 20 des Fahrzeugs nachgeschaltet.

Aus der Darstellung gemäß Figur 2 geht, aufgetragen über ein am Getriebeeingang des Fahrzeugs gefordertes Moment, eine Bremsstrategie hervor, innerhalb der in verschiedene Betriebsmodi geschaltet wird.

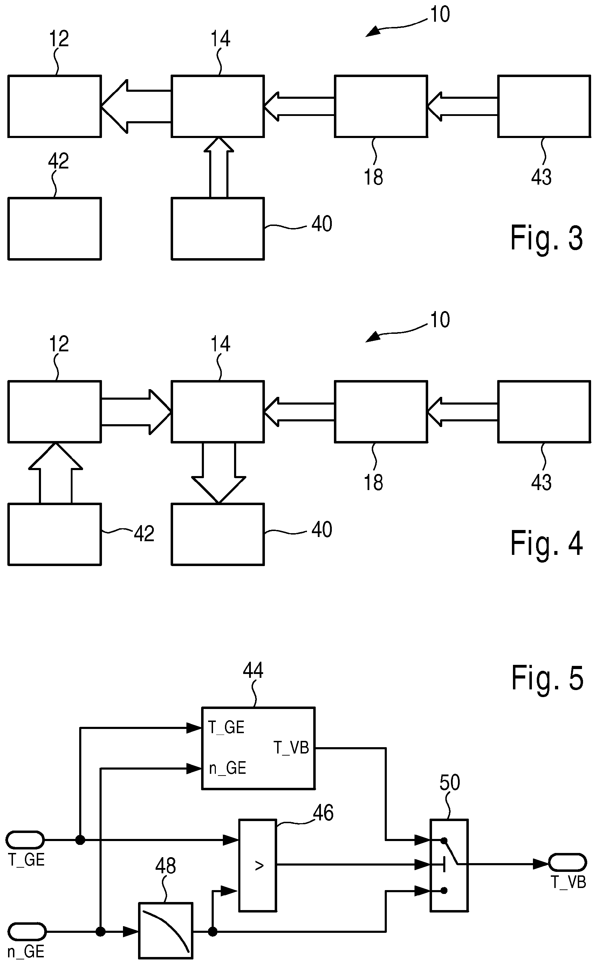

Figur 2 zeigt, dass ein Bremsfunktionsblock 44 (vergleiche Darstellung gemäß Figur 5) innerhalb eines Bremsbereiches 24 in einen ersten Betriebsmodus "Schleppbetrieb" oder in einen zweiten Betriebsmodus ② verzweigt. Dies hängt ab vom am Getriebeeingang geforderten Moment $T_{GE, gef}$. Der in Figur 5 dargestellte Bremsfunktionsblock 44 wird dann aktiv, wenn das geforderte Getriebeeingangsmoment $T_{GE, gef}$ kleiner als 0 wird, d. h. ein Bremsvorgang vorliegt, und größer als das Schleppmoment $T_{VB, Schlepp}$ der Verbrennungskraftmaschine 12 ist. Die Bedingung für die Anwendung einer Bremsstrategie lautet somit:

$$T_{VB, Schlepp} < T_{GE, gef} < 0$$

Die Entscheidung, die durch den Bremsfunktionsblock 44 im Rahmen der Bremsstrategie getroffen werden muss, findet zwischen zwei möglichen Betriebsmodi der Verbrennungskraftmaschine 12 eines Hybridantriebs, insbesondere eines Parallelhybridantriebs 10, statt. Entweder befindet sich die Verbrennungskraftmaschine 12 im Schleppbetrieb, in Figur 2 durch ① dargestellt, oder die Verbrennungskraftmaschine 12 liefert ohne Verstellung des Zündwinkels ihr minimales Antriebsmoment $T_{VB, min} > 0$. Bei fremdgezündeten Verbrennungskraftmaschinen ist es nicht sinnvoll, ein Moment bereitzustellen, das zwischen 0 und $T_{VB, min}$, d. h. dem minimalen Antriebsmoment der Verbrennungskraftmaschine 12, liegt, da in diesem Bereich die Einspritzmenge konstant gehalten wird und die Momentenreduzierung lediglich über eine Zündwinkelverstellung erfolgen kann. Dieser nicht sinnvolle Bereich ist in der Darstellung gemäß Figur 2 mit Bezugszeichen 28 gekennzeichnet. Der Schleppbetrieb der Verbrennungskraftmaschine 12 ist durch Bezugszeichen 26 angegeben und ein Betriebsbereich, in den die Verbrennungskraftmaschine einen Antrieb liefert, d. h. der Antriebsbereich der Verbrennungskraftmaschine 12, ist in Figur 2 durch Bezugszeichen 30 gekennzeichnet, in dem das am Getriebeeingang geforderte Moment $T_{GE, gef}$ das minimale Antriebsmoment $T_{VB, min}$ der Verbrennungskraftmaschine 12 übersteigt.

In den Figuren 3 und 4 sind Leistungsflüsse im Antriebsstrang eines hybridangetriebenen Fahrzeugs dargestellt.

Je nachdem, ob die Verbrennungskraftmaschine im Schleppbetrieb ① oder mit ihrem minimalen Antriebsmoment $T_{VB, min}$, dargestellt durch ②, betrieben wird, passt sich der mindestens eine elektrische Antrieb der jeweiligen Betriebsvariante der Verbrennungskraftmaschine 12 an.

Gemäß des Betriebsmodus' ① Schleppbetrieb liegt das Schleppmoment $T_{VB, Schlepp}$ der Verbrennungskraftmaschine 12 kleiner 0, während der mindestens eine elektrische Antrieb im Motorbetrieb betrieben wird und ein Drehmoment $T_{EM,1}$ größer 0 liefert. Der sich einstellende Leistungsfluss im Antriebsstrang des hybridangetriebenen Fahrzeugs ist in Figur 3 dargestellt. Im Schleppbetrieb ① wird dem mindestens einen elektrischen Antrieb 14 über das Fahrzeug 43 und das Getriebe 18 ein Moment übertragen. Der mindestens eine elektrische Antrieb 14 gleicht die Differenz zu dem im Schleppbetriebsmodus ① wirkenden Bremsmoment der Verbrennungskraftmaschine 12 aus, indem der mindestens eine elektrische Antrieb 14 als Motor wirkt und das Moment $T_{EM, 1} = T_{GE, gef} - T_{VB, Schlepp} > 0$ aufbringt. Wie aus dem Leistungsfluss gemäß Figur 3 für die Variante Schleppbetrieb ① hervorgeht, treibt der mindestens eine elektrische Antrieb 14 die mindestens eine Verbrennungskraftmaschine 12 an und nimmt Leistung aus dem Energiespeicher 40 auf. Zwischen der im Schleppbetrieb ① betriebenen Verbrennungskraftmaschine 12 und einem Kraftstofftank 42 des Fahrzeugs 43 besteht keine Verbindung, d. h. es erfolgt kein "Leistungsfluss" vom Kraftstofftank 42 zur Verbrennungskraftmaschine 12 des Hybridantriebes 10.

Im Betriebsmodus ②, in dem die Verbrennungskraftmaschine 12 mit dem minimalen Antriebsmoment $T_{VB, min}$ betrieben wird, stellt sich der in Figur 4 dargestellte resultierende Leistungsfluss im Antriebsstrang des hybridangetriebenen Fahrzeugs ein. Während die Verbrennungskraftmaschine 12 mit dem minimalen Antriebsmoment $T_{VB, min} > 0$ betrieben wird, wird der mindestens eine elektrische Antrieb 14 im Generatorbetrieb betrieben und liefert ein Drehmoment $T_{EM, 2} < 0$. In diesem Falle liefert die Verbrennungskraftmaschine 12 ihr minimales Antriebsmoment $T_{VB, min}$ ohne Zündwinkelverstellung. Es stellt sich ein "Leistungsfluss" vom Kraftstofftank 42 zur Verbrennungskraftmaschine 12 ein und ein Leistungsfluss von dieser zum mindestens einen elektrischen Antrieb 14. Fahrzeug und Fahrzeuggetriebe 18 liefern in der mit ② gekennzeichneten Betriebsphase ebenfalls einen Momentenanteil an den mindestens einen elektrischen Antrieb 14, so dass der mindestens eine elektrische Antrieb 14, der in diesem Falle im Generatorbetrieb betrieben wird, den mindestens einen Energiespeicher 40 des Fahrzeugs 43 auflädt. Die auf den mindestens einen elektrischen Antrieb 14 wirkenden Momente werden gemäß des in Figur 4 dargestellten resultierenden Leistungsflusses zum Laden des mindestens einen Energiespeichers 40 genutzt. In diesem Falle nimmt der mindestens eine elektrische Antrieb das Moment $T_{EM, 2} = T_{GE, gef} - T_{VB, min} < 0$ auf.

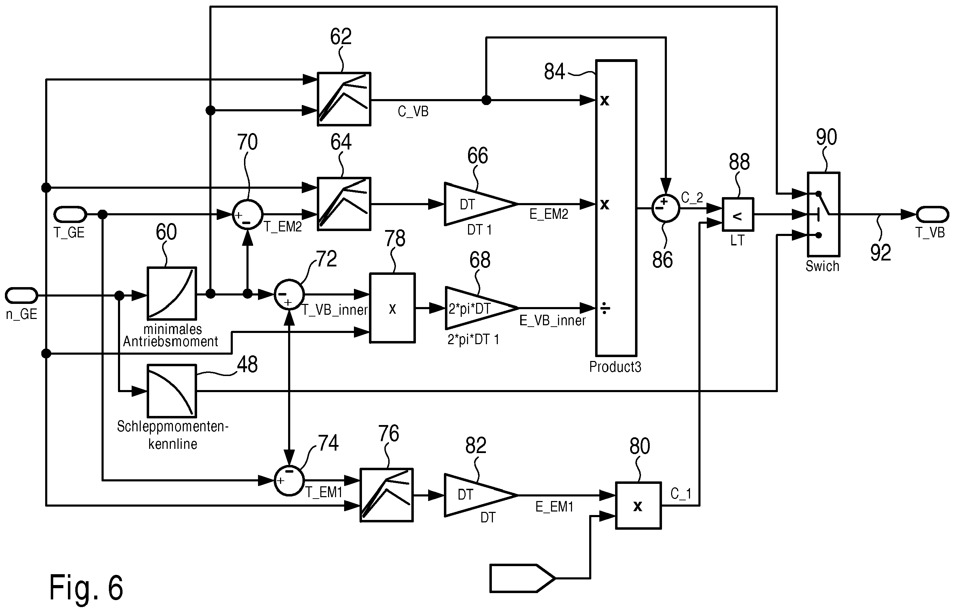

Die Aufgabe des in Figur 5 dargestellten Bremsfunktionsblockes 44 liegt darin, zu entscheiden, welcher der beiden Betriebsmodi der Verbrennungskraftmaschine 12, deren resultierende Leistungsflüsse im Antriebsstrang den Figuren 3 und 4 zu entnehmen sind, der energetisch günstigere ist. Als Kriterium dazu seien die Kosten definiert, die für beide möglichen Betriebsmodi ①, ② berechnet und verglichen werden. Bei den nachstehend beschriebenen Gleichungen seien die Wirkungsgrade zunächst vernachlässigt; in den Blockschaltbildern gemäß der Figuren 5 und 6 finden die Wirkungsgrade in Kennfeldern Berücksichtigung.

Der Darstellung gemäß Figur 5 ist ein Schaltschema zur Implementierung der in Figur 2 skizzierten Bremsstrategie unter Berücksichtigung des Betriebsmodus' der Verbrennungskraftmaschine des Hybridantriebes zu entnehmen.

Figur 5 zeigt, dass die Parameter $T_{GE}$, d. h. das Moment am Getriebeeingang, und $n_{GE}$, die Drehzahl am Getriebeeingang, als Eingangsgrößen Verwendung finden. Diesen beiden Parametern entsprechende Signale werden den Eingängen des Bremsfunktionsblocks 44 zugeführt, in dem die Bremsstrategie (vergleiche Position 24 in Figur 2) ermittelt wird. Das dem am Getriebeeingang geforderten Moment entsprechende Signal T_GE wird einer Vergleichsstufe 46 aufgegeben, das der Drehzahl am Getriebeeingang n_GE entsprechende Signal wird eingangsseitig einem Schleppmomentenkennfeld 48 aufgegeben. Der aus diesem resultierende Wert für das Schleppmoment wird anschließend der Vergleichsstufe 46 übermittelt. In der Vergleichsstufe 46 erfolgt ein Vergleich des Momentenwertes am Getriebeeingang T_GE und dem aus dem Schleppmomentenkennlinienfeld 48 ermittelten Wert für das Schleppmoment $T_{VB, Schlepp}$ der Verbrennungskraftmaschine. In dem Bremsfunktionsblock 44 wird anhand der dort eingangsseitig anliegende Signale T_GE und n_GE ein Wert für das Sollmoment $T_{VB}$ der Verbrennungskraftmaschine 12 ermittelt. Dieser Wert wird einem Schalter 50 eingangsseitig aufgegeben, an dem der aus der Vergleichsstufe 46 stammende, aus einem Vergleich der Signale T_GE und $T_{VB, Schlepp}$ resultierende Wert als Signal aufgegeben wird. In der Vergleichsstufe 46 erfolgt der Vergleich zwischen dem geforderten Getriebeeingangsmoment T_GE und dem Schleppmoment $T_{VB, Schlepp}$ der Verbrennungskraftmaschine 12. Die Vergleichsstufe 46 liefert entweder den Wert "wahr" oder "falsch". Ist die Bedingung T_GE > T_VB, Schlepp erfüllt, also wahr, so wird am Schalter 50 der obere Eingang durchgeschaltet, so dass die Bremsstrategie 24 Verwendung findet, anderenfalls der untere Eingang durchgeschaltet, d. h. die Verbrennungskraftmaschine 12 läuft grundsätzlich im Schleppbetrieb.

Daneben wird der aus dem Schleppmomentenkennfeld 48 der Verbrennungskraftmaschine 12 entsprechend des Signals n_GE für die Drehzahl am Getriebeeingang ermittelte Wert an den Schalter 50 weitergegeben. Der Schalter 50 schaltet das an dem Bremsfunktionsblock 44 ermittelte Signal für das Sollmoment der Verbrennungskraftmaschine 12, d. h. T_VB, für den Fall durch, dass das eingangsseitig am Getriebe 18 anliegende Moment T_GE größer als das Schleppmoment $T_{VB, Schlepp}$ der Verbrennungskraftmaschine 12 ist.

Der Darstellung gemäß Figur 6 ist ein Signalflussplan mit den Eingangsparametern T_GE Getriebeeingangsmoment, und n_GE Drehzahl am Getriebeeingang und dem Ausgangssignal T_VB für das Sollmoment der Verbrennungskraftmaschine des Hybridantriebes zu entnehmen.

Der Darstellung gemäß Figur 6 ist ein Signalflussplan zur implementierten Bremsstrategie zu entnehmen, wobei eingangsseitig das geforderte Moment am Getriebeeingang $T_{GE, gef}$ und die Drehzahl am Getriebeeingang $n_{GE}$ vorliegen und ausgangsseitig eine Sollmomentvorgabe $T_{VB}$ für die Verbrennungskraftmaschine ermittelt wird.

Der Darstellung gemäß Figur 6 ist entnehmbar, dass einem Kennlinienfeld für das minimale Antriebsmoment $T_{VB, min}$ 60 sowie einem Kennlinienfeld 48 für die Schleppmomentenkennlinie das der Drehzahl am Getriebeeingang entsprechende Signal $n_{GE}$ zugeführt wird. Dieses Signal wird daneben auch Kennfeldern 64 beziehungsweise 76 für den mindestens einen elektrischen Antrieb 14 für den Generatorbetrieb und für den Motorbetrieb zugeführt. Daneben wird das Signal $n_{GE}$ auch einem Verbrauchskennfeld für die Verbrennungskraftmaschine 12 aufgegeben. Das am Fahrzeuggetriebe 18 geforderte Getriebeeingangsmoment $T_{GE}$ wird sowohl einem dritten Summationspunkt 74 als auch einem ersten Summationspunkt 70 zugeführt. Das aus dem Kennlinienfeld 60 ermittelte, zum Drehzahlsignal n_GE korrespondierende minimale Antriebsmoment $T_{VB, min}$ wird einerseits einem Schalter 90 unmittelbar zugeführt und andererseits am ersten Summationspunkt 70, mit negativem Vorzeichen behaftet, übertragen. Die Information T_EM2 steht für das Moment, das von dem mindestens einen elektrischen Antrieb 14 im Generatormodus aufgenommen wird, für den Fall, dass die Verbrennungskraftmaschine mit minimalem Antriebsmoment betrieben wird. Der Wert für das minimale Antriebsmoment $T_{VB, min}$, ermittelt aus dem Kennfeld 60, steht darüber hinaus an einem zweiten Summationspunkt 72, mit negativem Vorzeichen behaftet, an. Am dritten Summationspunkt 74 wird aus dem eingangsseitig vorliegenden Wert für das geforderte Moment $T_{GE}$ und dem aus Kennlinie 48 ermittelten Schleppmoment $T_{VB, Schlepp}$ der Verbrennungskraftmaschine 12 ein Wert für das Moment des mindestens einen elektrischen Antriebes 14 im Motormodus ermittelt, T_EM1. Dieser Wert wird dem Kennfeld 76 für den mindestens einen elektrischen Antrieb 14, der im Motorbetrieb betrieben wird, zugeführt. Aus diesem Kennfeld 76 erfolgt unter Zwischenschaltung einer dritten Multiplikationsstufe 82 die Ermittlung des Wertes für die aus der elektrischen Maschine 14 entnommene Energie im Motormodus, E_EM1. Mit $C_{Batt}$ ist der Preis für die aus dem mindestens einen Energiespeicher 40 entnommene Energie bezeichnet, welcher den Lebenszyklus des mindestens einen Energiespeichers 40 abbildet, in dem $C_{Batt}$ die Batteriezyklen hinsichtlich Antreiben und Bremsen sowie hinsichtlich der Lade- und Entladevorgänge berücksichtigt.

$$C_{Batt} = \frac{C_{Batt,alt} \bullet E_{Batt,alt} + C_{Batt,L} \bullet E_{Batt,L}}{E_{Batt,alt} + E_{Batt,L}}$$

mit

$C_{Batt, alt}$:    mittlerer Energiepreis vor einem Ladevorgang
$E_{Batt, alt}$:    Energiemenge in der Batterie vor einem Ladevorgang
$C_{Batt, L}$:    mittlerer Energiepreis während eines Ladevorgangs
$E_{Batt, L}$:    Energiemenge, die während eines Ladevorgangs eingespeist wird.

Der Preis der Batterieleistung ist demnach variabel und an die Entstehungsgeschichte der in der Batterie gespeicherten Energie angepasst. Der mittlere Energiepreis während eines Ladevorgangs $C_{Batt, L}$ ist durch den Mehrverbrauch der Verbrennungskraftmaschine 12 im entsprechenden Betriebspunkt festgelegt. Daraus resultiert z. B. bei einem reinen Rekuperationsbetrieb mit Schleppbetrieb der Verbrennungskraftmaschine 12 ein mittlerer Energiepreis von Null, da die Verbrennungskraftmaschine 12 keine Kosten verursacht. Die innere Energie $E_{VB, inner}$ der Verbrennungskraftmaschine 12, d. h. das Überwinden des Schleppmomentes und das Bereitstellen des äußeren Momentes, stellt die maximal rekuperierbare Energiemenge dar.

Aus dem Kennfeld 64 für die mindestens eine elektrische Maschine 14, die im Generatormodus betrieben wird, wird unter Zwischenschaltung eines ersten Multiplikators 66 ein Wert für die eingespeiste Energie E_EM2 ermittelt und steht eingangsseitig an der Verknüpfungsstufe 84 an. Ein erster Multiplikator 78 ermittelt aus dem Wert T_VB_inner und dem Signal n_GE mittels eines zweiten Multiplikators 68 die innere Energie der Verbrennungskraftmaschine $E_{VB, inner}$, die ebenfalls eingangsseitig an der Verknüpfungsstufe 84 ansteht. T_VB_inner bezeichnet das innere Moment der Verbrennungskraftmaschine 12. Damit ist das Moment gemeint, welches die Verbrennungskraftmaschine 12 liefern würde, wäre sie frei von Reibungsverlusten. Das innere Moment der Verbrennungskraftmaschine 12 berechnet sich aus dem Unterschied zwischen tatsächlichem Antriebsmoment (positiv) und dem Schleppmoment (negativ). In der Berechnung wird der negative Wert von T_VB_inner verwendet, also gemäß der Beziehung:

$$\text{T\_VB\_inner} = \text{T\_VB, Schlepp} - \text{T\_VB, min.}$$

Das aus dem Kennfeld 48 für die Schleppmomentenkennlinie hervorgehende Schleppmoment steht eingangsseitig am Schalter 90 an.

Am Vergleicher 88 werden die am vierten Summationspunkt 86 ermittelten Kosten $C_2$, die einen Generatorbetrieb des mindestens einen elektrischen Antriebs 14 berücksichtigen, mit den Kosten $C_1$, die einen Betrieb der des mindestens einen elektrischen Antriebs 14 im Motorbetrieb berücksichtigen, miteinander verglichen und an den Schalter 90 übermittelt. Aus dem Vergleich im Vergleicher 88 der Kosten $C_2$ mit den Kosten $C_1$ rührt letztlich die Entscheidung der Bremsstrategie 24 her, welcher Betriebsmodus der Verbrennungskraftmaschine 12, d. h. der Schleppbetrieb ① oder der Betrieb mit minimalem Antriebsmoment $T_{VB, min}$ ②, der wirtschaftlich günstigere ist.

In den Multiplikatoren 66, 68 und 82 werden Multiplikationen mit einer Zeitschrittweite DT vorgenommen, um von Leistungen zu Energien zu gelangen.

**Patentansprüche**

1. Verfahren zum Betrieb eines Hybridantriebes, insbesondere eines Parallelhybridantriebes (10), eines Fahrzeugs mit einer Verbrennungskraftmaschine (12) und mindestens einem elektrischen Antrieb (14), die über eine Kopplung (22) miteinander verbunden sind, mindestens einem Energiespeicher (40) und einem Fahrzeuggetriebe (18), wobei der mindestens eine elektrische Antrieb (14) über eine Trennkupplung (16) vom Fahrzeuggetriebe (18) trennbar ist, wobei während Verzögerungsphasen, in denen ein getriebeeingangsseitig gefordertes Getriebeeingangsmoment ($T_{GE,gef}$) < 0 vorliegt, die Verbrennungskraftmaschine (12) entweder im Schleppbetrieb ① oder mit minimalem Antriebsdrehmoment ($T_{VB,min}$) betrieben wird, **dadurch gekennzeichnet, dass** eine innerhalb eines Bremsfunktionsmodus' (44) implementierte Bremsstrategie (24) die energetisch günstigere Variante des Betriebes der Verbrennungskraftmaschine (12) im Schleppbetrieb ① oder mit minimalem Antriebsmoment ($T_{VB,min}$) anhand eines Kostenvergleiches von für die Entnahme einer Energie ($E_{EM,1}$) zum Schleppen der Verbrennungskraftmaschine (12) anhand

$$C_1 = E_{EM,\,1} \bullet C_{Batt}$$

mit

$C_1$: Kosten der Energieentnahme aus dem mindestens einen Energiespeicher (40)

$E_{EM,\,1}$: aus dem mindestens einen Energiespeicher (40) durch eine elektrische Maschine (14) im Motormodus entnommene Energie

$C_{Batt}$: Preis für die aus dem mindestens einen Energiespeicher (40) entnommene Energie, welcher den Lebenszyklus des mindestens einen Energiespeichers (40) durch Berücksichtigung der Batteriezyklen hinsichtlich Antreiben und Bremsen sowie der Lade- und Entladevorgänge abbildet und für in den mindestens einen Energiespeicher (40) eingespeiste Energie anhand

$$C_2 = C_{VB} - E_{EM,2} \bullet \frac{C_{VB}}{E_{VB,inner}}$$

mit

$C_2$: Kosten der in mindestens einen Energiespeicher (40) eingespeisten Energie

$E_{EM,\,2}$: in mindestens einen Energiespeicher (40) eingespeiste Energie bei im Generatormodus betriebener elektrischer Maschine (14)

$C_{VB}$: Antriebsenergie der Verbrennungskraftmaschine (12)

$E_{VB,\,inner}$: innere Energie der Verbrennungskraftmaschine (12) zum Überwinden eines Schleppmomentes und zum Bereitstellen eines äußeren Momentes ermittelt,

und dass in einer Vergleichsstufe (88) eingangsseitig anliegende Faktoren ($C_1$) und ($C_2$) verglichen werden, wobei von einer Verknüpfungsstufe (84) die Faktoren ($C_{VB}$), ($E_{EM,2}$) und ($E_{VB,inner}$) an einen vierten Summationspunkt (86) übertragen werden, dem der Kostenfaktor ($C_{VB}$) für die Antriebsenergie der Verbrennungskraftmaschine (12) positiv aufgegeben wird und ein in einem zweiten Multiplikator (80) gebildetes Produkt aus ($E_{EM,1}$) und ($C_{Batt}$) vorliegen.

2. Verfahren gemäß Anspruch 1, **dadurch gekennzeichnet, dass** bei im Schleppbetrieb ① betriebener Verbrennungskraftmaschine (12) der mindestens eine elektrische Antrieb (14) im Motorbetrieb betrieben wird.

3. Verfahren gemäß Anspruch 1, **dadurch gekennzeichnet, dass** bei mit minimalem Antriebsmoment ($T_{VB,min}$) betriebener Verbrennungskraftmaschine (12) der mindestens eine elektrische Antrieb (14) im Generatormodus betrieben wird und den mindestens einen Energiespeicher (40) lädt.

4. Verfahren gemäß Anspruch 2, **dadurch gekennzeichnet, dass** der mindestens eine elektrische Antrieb (14) im Motormodus ein Moment

$$T_{EM,\,1} = T_{GE,\,gef} - T_{VB,\,Schlepp} > 0$$

aufbringt, mit

$T_{EM,\,1}$: Moment der elektrischen Maschine (14) im Motormodus

$T_{GE,\,gef}$: getriebeeingangsseitig gefordertes Getriebeeingangsmoment

$T_{VB,\,Schlepp}$: Schleppmoment der Verbrennungskraftmaschine (12)

5. Verfahren gemäß Anspruch 3, **dadurch gekennzeichnet, dass** der mindestens eine elektrische Antrieb (14) im Generatormodus ein Moment

$$T_{EM,2} = T_{GE,gef} - T_{VB,min} < 0$$

liefert, mit

$T_{EM,2}$: Moment der elektrischen Maschine (14) im Generatormodus
$T_{GE,gef}$: getriebeeingangsseitig gefordertes Getriebeeingangsmoment Moment
$T_{VB,min}$: minimales Antriebsmoment der Verbrennungskraftmaschine 12

6. Verfahren gemäß Anspruch 1, **dadurch gekennzeichnet, dass** die in den mindestens einen Energiespeicher (40) eingespeiste Energie ($E_{EM,2}$) gemäß der Beziehung

$$T_{EM,2} \bullet 2\pi \bullet n_{GE} \bullet \Delta t = E_{EM,2}$$

und die innere Energie der Verbrennungskraftmaschine (12) gemäß der Beziehung

$$E_{VB,inner} = (T_{VB,Schlepp} - T_{VB,min}) \bullet 2\pi \bullet n_{GE} \bullet \Delta t$$

mit

$T_{EM,2}$: Moment der elektrischen Maschine (14) im Generatormodus
$n_{GE}$: getriebeeingangsseitige Drehzahl
$T_{VB,Schlepp}$: Schleppmoment der Verbrennungskraftmaschine (12)
$T_{VB,min}$: minimales Antriebsmoment der Verbrennungskraftmaschine (12) ermittelt wird.

7. Verfahren gemäß Anspruch 1, **dadurch gekennzeichnet, dass** der Faktor ($C_{Batt}$) Lade- und Entladezyklen des mindestens einen Energiespeichers (40) berücksichtigt.

**Claims**

1. Method for operating a hybrid drive, in particular a parallel hybrid drive (10) of a motor vehicle having an internal combustion engine (12) and at least one electric drive (14) which are connected to one another via a coupling (22), at least one energy store (40) and a vehicle transmission (18), wherein the at least one electric drive (14) can be disconnected from the vehicle transmission (18) by means of a clutch (16) wherein during deceleration phases in which a transmission input torque ($T_{GE,gef}$) which is requested on the transmission input side is < 0 the internal combustion engine (12) is either in the overrun mode ① or is operated with a minimum drive torque ($T_{VB,min}$), **characterized in that** a braking strategy (24) which is implemented within a braking function mode (44) determines the energetically most favourable variant of the operation of the internal combustion engine (12) in the overrun mode ① or with minimum drive torque ($T_{VB,min}$) on the basis of a cost comparison of for the extraction of energy ($E_{EM,1}$) for overrun operation of the internal combustion engine (12) on the basis of

$$C_1 = E_{EM,1} \bullet C_{Batt}$$

where

$C_1$ is costs of the extraction of energy from the at least one energy store (40)
$E_{EM,1}$ is energy extracted from the at least one energy store (40) by an electric machine (14) in the motor mode and
$C_{Batt}$ is the price of the energy extracted from the at least one energy store (40), which price reflects the life cycle of the at least one energy store (40) by taking into account the battery cycles in terms of providing drive and braking as well as the charging and discharging processes,

and for energy fed into the at least one energy store (40) on the basis of

$$C_2 = C_{VB} - E_{EM,2} \bullet \frac{C_{VB}}{E_{VB,inner}}$$

where

$C_2$ is costs of the energy fed into the at least one energy store (40)

$E_{EM,2}$ is energy fed into the at least one energy store (40) when the electric machine (14) is operated in the generator mode,

$C_{VB}$ is drive energy of the internal combustion engine (12),

$E_{VB,inner}$ is internal energy of the internal combustion engine (12) for overcoming a drag torque and for making available an external torque,

and **in that** factors ($C_1$) and ($C_2$) which are present on the input side are compared in a comparator stage (88), wherein the factors ($C_{VB}$), ($E_{EM,2}$) and ($E_{VB,inner}$) are transmitted from a logic operation stage (84) to a fourth summing point (86), to which the cost factor ($C_{VB}$) for the drive energy of the internal combustion engine (12) is positively added, and a product of ($E_{EM,1}$) and ($C_{Batt}$) which is formed in a second multiplier (80) is present.

2. Method according to Claim 1, **characterized in that** when the internal combustion engine (12) is operated in the overrun mode ① the at least one electric drive (14) is operated in the motor mode.

3. Method according to Claim 1, **characterized in that** in the case of the internal combustion engine (12) which is being operated with the minimum drive torque ($T_{VB.min}$) the at least one electric drive (14) is operated in the generator mode and charges the at least one energy store (40).

4. Method according to Claim 2, **characterized in that** in the motor mode the at least on eelectric drive (14) applies a torque

$$T_{EM,1} = T_{GE,gef} - T_{VB,Schlepp} > 0$$

where

$T_{EM,1}$ is the torque of the electric machine (14) in the motor mode,

$T_{GE,gef}$ is the transmission input torque requested on the transmission input side, and

$T_{VB,Schlepp}$ is the drag torque of the internal combustion engine (12).

5. Method according to Claim 3, **characterized in that** in the generator mode the at least one electric drive (14) supplies a torque

$$T_{EM,2} = T_{GE,gef} - T_{VB,min} < 0$$

where

$T_{EM,2}$ is the torque of the electric machine (14) in the generator mode,

$T_{GE,gef}$ is the transmission input torque requested on the transmission input side, and

$T_{VB,min}$ is the minimum drive torque of the internal combustion engine (12).

6. Method according to Claim 1, **characterized in that** the energy ($E_{EM,2}$) which is fed into the at least one energy store (40) is determined according to the relationship:

$$T_{EM,2} \bullet 2\eta \bullet n_{GE} \bullet \Delta t = E_{EM,2}$$

and the internal energy of the internal combustion engine (12) is determined according to the relationship

$$E_{VB,inner} = (T_{VB,Schlepp} - T_{VB,min}) \cdot 2\eta \cdot n_{GE} \cdot \Delta t$$

where

$T_{EM,2}$ is the torque of the electric machine (14) in the generator mode,
$n_{GE}$ is the rotational speed on the transmission input side,
$T_{VB,Schlepp}$ is the drag torque of the internal combustion engine (12) and
$T_{VB,min}$ is the minimum drive torque of the internal combustion engine (12).

7. Method according to Claim 1, **characterized in that** the factor ($C_{Batt}$) takes into account charging and discharging cycles of the at least one energy store (40) .


**Revendications**

1. Procédé pour faire fonctionner un groupe propulseur hybride, notamment un groupe propulseur hybride parallèle (10), d'un véhicule comprenant un moteur à combustion interne (12) et au moins un groupe propulseur électrique (14) qui sont reliés ensemble par le biais d'un accouplement (22), au moins un accumulateur d'énergie (40) et une boîte de vitesses de véhicule (18), l'au moins un groupe propulseur électrique (14) pouvant être séparé de la boîte de vitesses de véhicule (18) par le biais d'un accouplement de séparation (16), procédé selon lequel, pendant les phases de ralentissement, dans lesquelles un couple d'entrée de boîte de vitesses exigé ($T_{GE,gef}$) <0 est présent au côté de l'entrée de la boîte de vitesses, le moteur à combustion interne (12) fonctionne soit dans le régime traîné (1), soit avec un couple d'entraînement minimal ($T_{VB.min}$), **caractérisé en ce qu'**une stratégie de freinage (24) mise en oeuvre au sein d'un mode de fonction de freinage (44) détermine la variante énergétiquement la plus favorable du fonctionnement du moteur à combustion interne (12) en régime traîné (1) ou avec le couple d'entraînement minimal ($T_{VB,min}$) au moyen d'une comparaison des coûts de pour le prélèvement d'une énergie ($E_{BM,1}$) nécessaire pour traîner le moteur à combustion interne (12) à l'aide de

$$C_1 = E_{EM,1} * C_{Batt}$$

où

$C_1$ désigne le coût du prélèvement d'énergie de l'au moins un accumulateur d'énergie (40),
$E_{EM,1}$ désigne l'énergie prélevée de l'au moins un accumulateur d'énergie (40) par une machine électrique (14) en mode moteur,
$C_{Batt}$ désigne le prix pour l'énergie prélevée de l'au moins un accumulateur d'énergie (40), lequel représente le cycle de vie de l'au moins un accumulateur d'énergie (40) en tenant compte des cycles de batterie du point de vue de la propulsion et du freinage ainsi que des opérations de charge et de décharge,

et pour l'énergie injectée dans l'au moins un accumulateur d'énergie (40) à l'aide de

$$C_2 = C_{VB} - E_{EM,2} * \frac{C_{VB}}{E_{VB,inner}}$$

où

$C_2$ désigne le coût de l'énergie injectée dans au moins un accumulateur d'énergie (40),
$E_{EM,2}$ désigne l'énergie injectée dans au moins un accumulateur d'énergie (40) lorsque la machine électrique (14) fonctionne en mode générateur,
$C_{VB}$ désigne l'énergie motrice du moteur à combustion interne (12),
$E_{VB,inner}$ désigne l'énergie intérieure du moteur à combustion interne (12) pour surmonter un couple de traînage et délivrer un couple externe,
et **en ce que** les facteurs ($C_1$) et ($C_2$) appliqués en entrée sont comparés dans un étage de comparaison (88), les facteurs ($C_{VB}$) , ($E_{EM,2}$) et ($E_{VB,inner}$) étant transmis par un point de combinaison (84) à un quatrième point d'addition (86) auquel est cédé positivement le facteur de coût ($C_{VB}$) pour l'énergie motrice du moteur à combustion interne (12) et un produit de ($E_{EM,1}$) et ($C_{Batt}$) calculé dans un deuxième multiplicateur (80) est présent.

2. Procédé selon la revendication 1, **caractérisé en ce que** lorsque le moteur à combustion interne (12) fonctionne en régime traîné (1), l'au moins un groupe propulseur électrique (14) fonctionne en mode moteur.

3. Procédé selon la revendication 1, **caractérisé en ce que** lorsque le moteur à combustion interne (12) fonctionne avec un couple d'entraînement minimal ($T_{VB,min}$), l'au moins un groupe propulseur électrique (14) fonctionne en mode générateur et charge l'au moins un accumulateur d'énergie (40).

4. Procédé selon la revendication 2, **caractérisé en ce qu'**en mode moteur, l'au moins un groupe propulseur électrique (14) applique un couple

$$T_{EM,1} = T_{GE,gef} - T_{VB,Schlepp} > 0$$

où

$T_{EM,1}$ désigne le couple de la machine électrique (14) en mode moteur,
$T_{GE,gef}$ désigne le couple d'entrée de la boîte de vitesses exigé du côté de l'entrée de la boîte de vitesses,
$T_{VB,Schlepp}$ désigne le couple de traînage du moteur à combustion interne (12).

5. Procédé selon la revendication 3, **caractérisé en ce qu'**en mode générateur, l'au moins un groupe propulseur électrique (14) délivre un couple

$$T_{EM,2} = T_{GE,gef} - T_{VB,min} < 0$$

où

$T_{EM,2}$ désigne le couple de la machine électrique (14) en mode générateur,
$T_{GE,gef}$ désigne le couple d'entrée de la boîte de vitesses exigé du côté de l'entrée de la boîte de vitesses,
$T_{VB,min}$ désigne le couple d'entraînement minimal du moteur à combustion interne (12).

6. Procédé selon la revendication 1, **caractérisé en ce que** l'énergie injectée ($E_{EM,2}$) dans l'au moins un accumulateur d'énergie (40) est déterminée conformément à la relation

$$T_{EM,2} * 2\pi * n_{GE} * \Delta t = E_{EM,2}$$

et l'énergie intérieure du moteur à combustion interne (12) conformément à la relation

$$E_{VB,inner} = (T_{VB,Schlepp}, T_{VB,min}) * 2\pi * n_{GE} * \Delta t$$

où

$T_{EM,2}$ désigne le couple de la machine électrique (14) en mode générateur,
$n_{GE}$ désigne la vitesse de rotation du côté de l'entrée de la boîte de vitesses,
$T_{VB,Schlepp}$ désigne le couple de traînage du moteur à combustion interne (12),
$T_{VB,min}$ désigne le couple d'entraînement du moteur à combustion interne (12).

7. Procédé selon la revendication 1, **caractérisé en ce que** le facteur ($C_{Batt}$) tient compte des cycles de charge et de décharge de l'au moins un accumulateur d'énergie (40).

Fig. 1

Fig. 2

$T_{VB, Schlepp}$    0    $T_{VB, min}$    $T_{GE, gef}$

12    14                          10

Fig. 3

42

40

18    43

12    14                          10

Fig. 4

42    40

18    43

Fig. 5

44

T_GE

T_VB

n_GE

50

T_GE

46

>

48

n_GE

T_VB

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10202531 A1

- US 20020094908 A